(19) Europäisches Patentamt

European Patent Office

Office européen des brevets

(11) Publication number: **0 506 102 A2**

## (12) EUROPEAN PATENT APPLICATION

(21) Application number: **92105336.9**

(22) Date of filing: **27.03.92**

(51) Int. Cl.⁵: **G06F 3/033**

(30) Priority: **29.03.91 JP 91646/91**

(43) Date of publication of application:
**30.09.92 Bulletin 92/40**

(84) Designated Contracting States:
**DE FR GB**

(71) Applicant: **Kabushiki Kaisha Toshiba**
**72, Horikawa-cho Saiwai-ku**
**Kawasaki-shi(JP)**

(72) Inventor: **Ito, Takafumi, c/o Intellectual**
**Property Div.**
**KABUSHIKI KAISHA TOSHIBA, 1-1 Shibaura**
**1-chome**
**Minato-ku, Tokyo 105(JP)**

(74) Representative: **Lehn, Werner, Dipl.-Ing. et al**
**Hoffmann, Eitle & Partner Patentanwälte**
**Arabellastrasse 4**
**W-8000 München 81(DE)**

(54) **Drawing preparing system in a data processing apparatus.**

(57) If it is discriminated that an input coordinate is on a line of an already-prepared drawing, a cursor is displayed at an input coordinate position. Thereafter, the display position of the cursor is fixed until it is discriminated that the input coordinate is out of a predetermined area, which is based on the cursor position on the line, or on the line of the drawing in the predetermined area.

F I G. 11A

F I G. 11B

EP 0 506 102 A2

F I G. 11C

2

The present invention relates to a drawing preparing system in a data processing apparatus having an integral display/input device in which a display device and a coordinate inputting device are incorporated.

A data processing apparatus having an integral display/input device in which a tablet for inputting coordinates and a display device are incorporated has an excellent operability since the input position of input coordinate data coincides with the display position. Due to this, in recent years, the data processing apparatus has been noticed as a data input/display system.

The integral display/input device is formed by stacking a transparent tablet, serving as a coordinate inputting device, on a liquid crystal display serving as a display device. A position on the tablet surface, which is designated by a stylus pen, is detected and input to the integral display/input device. The input positional data is processed by a controller for controlling the integral display/output device. A switch is formed in a pen-tip of the stylus pen. If the pen-tip is depressed to the tablet surface, the switch is in an ON state. If the pen-tip pressing is stopped and no pressure is applied thereto, the switch is in an OFF state.

The data processing apparatus having an integral display/input device is often used as a drawing preparing system since designation/input of positional data can be easily performed. In the graphic preparing system, an input of a straight line, for example, is performed by the following method.

(1) Designation of starting point

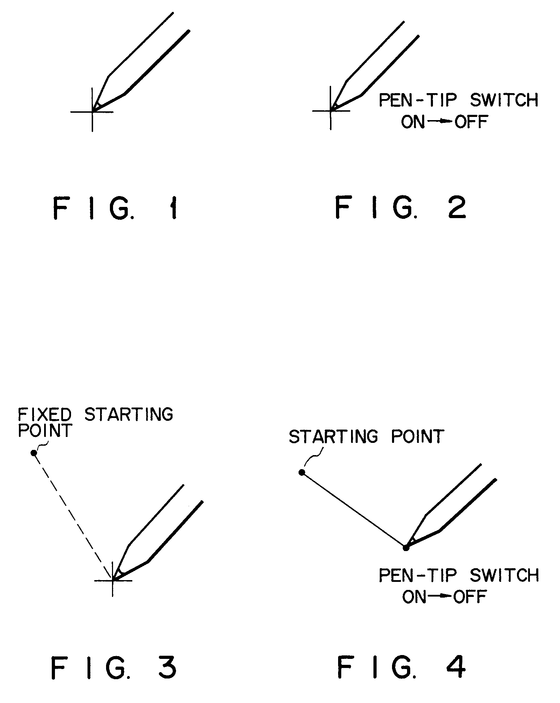

If the stylus pen is brought into contact with the tablet surface, a cross-shaped " + " cursor is displayed at the contact position as shown in Fig. 1. If the stylus pen is moved as the switch of the pen-tip is in the ON state, the cursor moves with the movement of the pen-tip position. If the cursor is moved to the position where a straight line to be prepared is started and the switch of the pen-tip is changed from the ON state to the OFF state, a coordinate position of the starting point is determined (Fig. 2).

(2) Designation of ending point

After determining the starting point, if the stylus pen is brought into contact with the tablet surface and the switch of the pen-tip is in the ON state, the cursor is displayed at the pen-tip position, and a dotted line is further drawn at the portion between the cursor and the starting point (Fig. 3). Then, if the cursor is moved to the position where the straight line to be prepared is ended and the switch of the pen-tip is changed to the OFF state, an ending point is determined and the straight line is prepared as shown in Fig. 4.

At the time of preparing the drawing, particularly for preparing the straight line, there often occurs a case in which the starting point or the ending point is correctly conformed onto the line of the other drawing already prepared as shown in Figs. 5 and 6. However, it is difficult to fix the pen-tip position. Also, as shown in Fig. 7, it is difficult to correctly conform the cursor onto the line of the other drawing so that the cursor is moved to always adjust to the pen-tip position. Due to this, as shown in Fig. 8, the cursor is often shifted slightly from the line of the already-prepared drawing.

An object of the present invention is to provide a graphic preparing system in which a characteristic point defining a drawing is correctly conformed onto the line of the other drawing already prepared.

The present invention provides a drawing preparing system in a data processing apparatus, which has an integral display/input device in which a display device and a coordinate inputting device are incorporated, prepares a drawing defined by a coordinate of a characteristic point designated by a cursor, and displays the drawing on the display device, comprising first discriminating means for discriminating whether or not a first coordinate input from the coordinate input device is on the line of the already-prepared drawing, second discriminating means for discriminating whether or not a second coordinate input after discriminating that the first coordinate is on the line of the drawing is out of a predetermined area including the first coordinate, third discriminating means for discriminating whether or not the second coordinate input after discriminating that the first coordinate is on the line of the drawing is in the predetermined area including the first coordinate, and cursor display position determining means for determining a cursor display position in accordance with the results of discrimination by the second and third discriminating means.

According to the above-mentioned arrangement, after discriminating that the cursor is on the line of the already-prepared drawing, the cursor is moved in accordance with the input coordinate in a case where the cursor is out of a predetermined area including a point of the cursor position or on the different line of the drawing. In a case where the cursor is in the predetermined area including the point of the cursor position, the display position of the cursor is fixed onto the line not to be moved. Thereby, the characteristic point of the drawing can be easily conformed onto the already-prepared drawing.

This invention can be more fully understood from the following detailed description when taken in conjunction with the accompanying drawings, in which:

Figs. 1 to 4 are views explaining an operation for preparing a straight line;

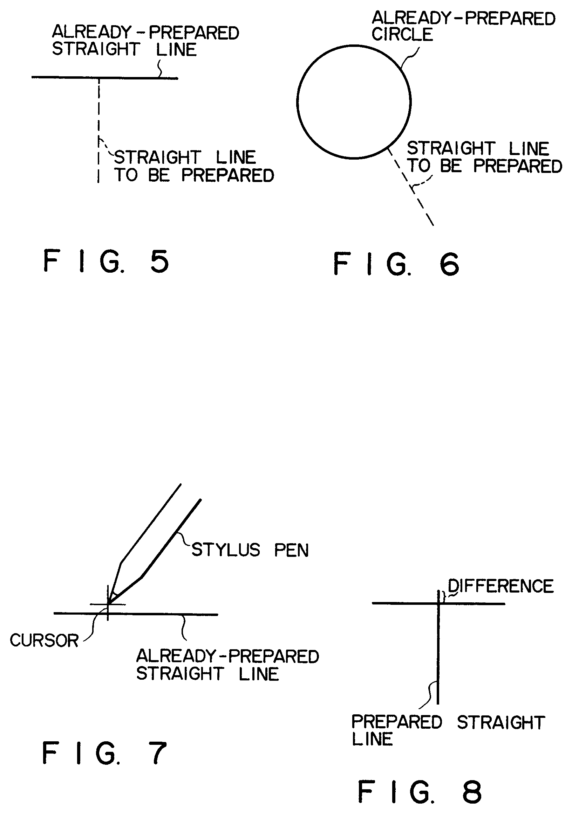

Figs. 5 to 8 are views explaining a state that a characteristic point of a drawing to be newly prepared is conformed onto the line of the already-prepared drawing;

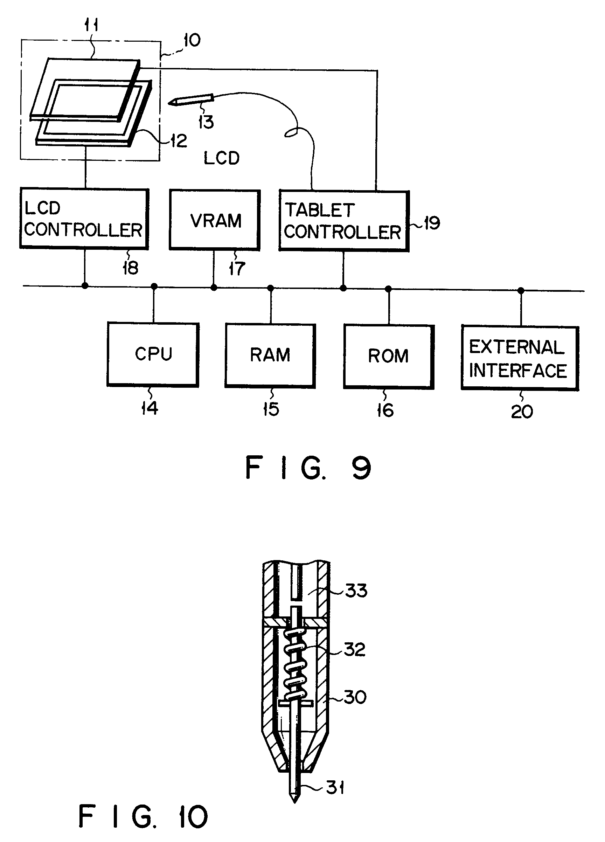

Fig. 9 is a block diagram showing an arrangement of a data processing apparatus having an integral display/input device;

Fig. 10 is a cross sectional view showing an arrangement of a switch of a pen-tip incorporated in a stylus pen 13;

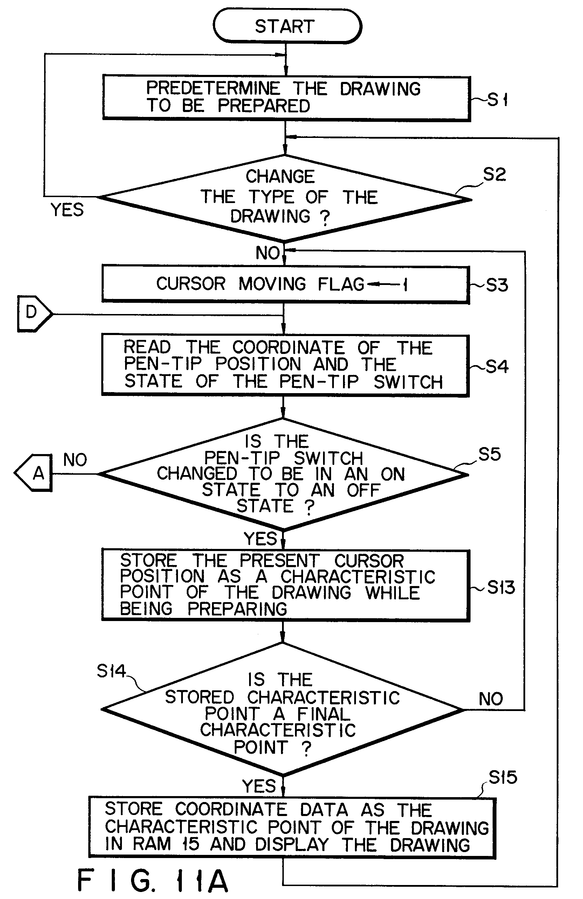

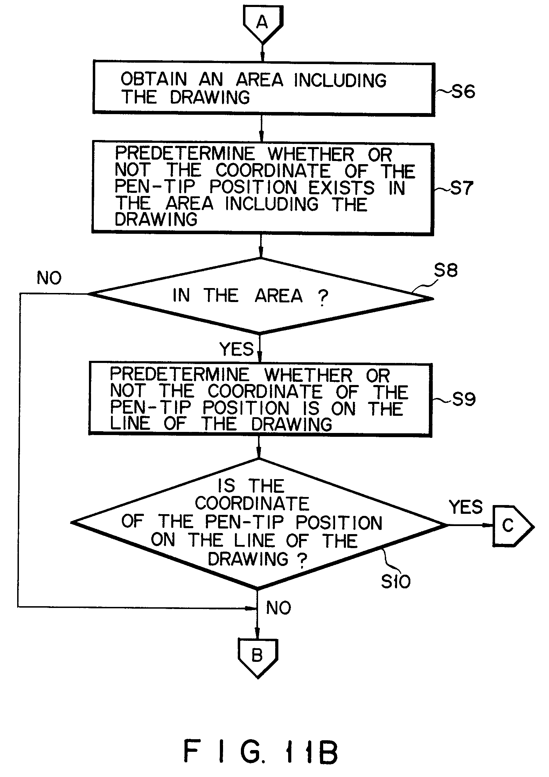

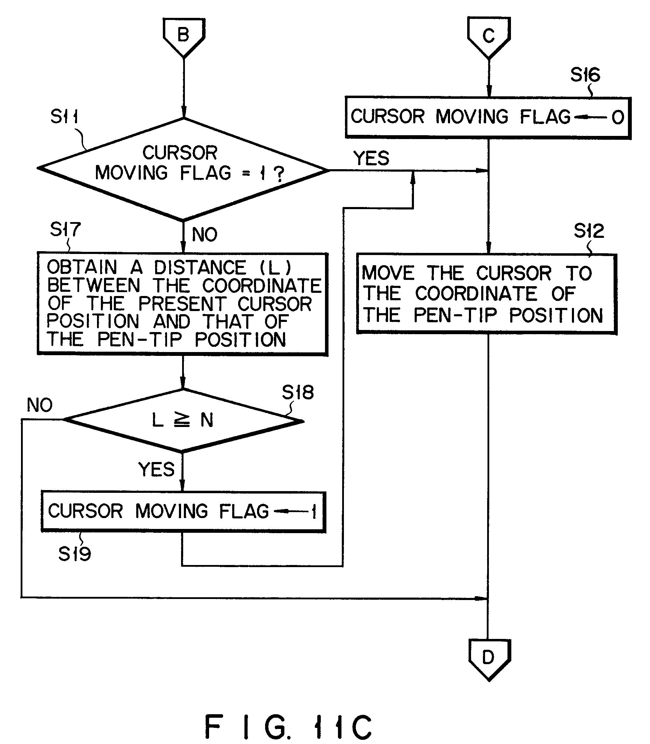

Figs. 11A to 11C are flow charts showing steps for preparing a drawing;

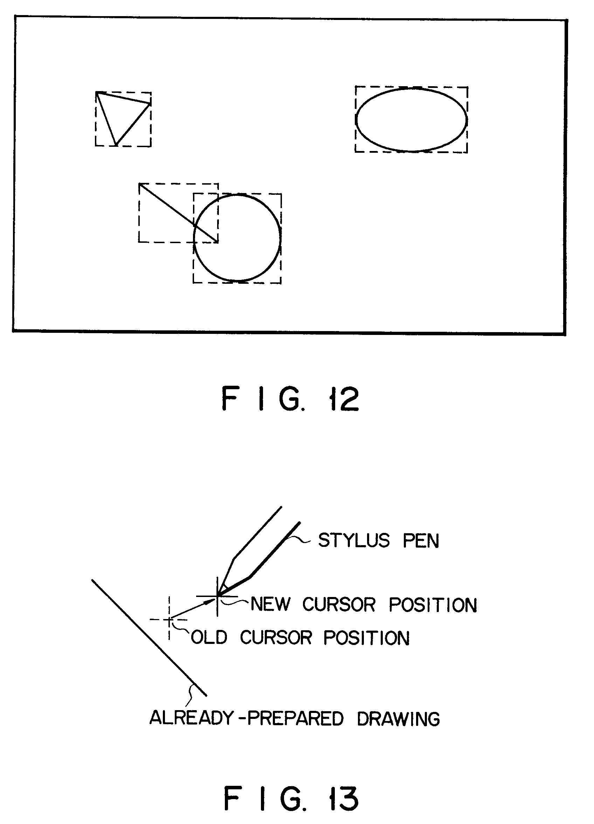

Fig. 12 is a view explaining a process for discriminating a coordinate position of the pen-tip;

Figs. 13 to 16 are views explaining a process for conforming the cursor onto the line of the drawing; and

Fig. 17 is a view explaining a process for moving the cursor fixed onto the line of the drawing.

An embodiment of the present invention will be explained with reference to the drawings.

Fig. 9 is a block diagram showing an arrangement of a data processing apparatus having an integral display/input device. An integral display/input device 10 is formed by stacking a transparent tablet 11, serving as a coordinate inputting device, on a liquid crystal display 12 serving as a display device. In the transparent tablet 11, transparent electrodes are arranged in a glass plate in the x and Y orthogonal directions so as to constitute a matrix arrangement. Pulse voltages are sequentially applied to these electrodes so that an X-Y coordinate position designated by a stylus pen 13 is detected by electrostatic induction. The tablet 11 and the stylus pen 13 are controlled by a tablet controller 19 (to be explained later). An LCD 11 is controlled by an LCD controller 18 (to be explained later).

A CPU 14 controls the overall data processing apparatus. A RAM 15 is a memory capable of a read/write operation and serves to store programs for defining operations of the CPU 14 and various types of data. The RAM 15 stores various types of data such as drawing data relating to the prepared drawing (types of drawings, coordinates of the characteristic point of the drawing), patterns input by hand-writing on the transparent tablet 11, a switch of the pen-tip status showing ON/OFF state of the switch of the pen-tip of the stylus pen 13, and a cursor moving flag. The cursor moving flag shows whether or not the cursor is on the line of the drawing when preparing the drawing. A ROM 16 is a read-only memory for storing a diagnostic program used after the power source for the data processing apparatus is turned on, a bootstrap program for starting the data processing apparatus, and a program for preparing a drawing. A VRAM 17 is a bit map memory for storing display data displayed by the LCD 12. The LCD controller 18 performs display control of such as display data transfer from VRAM 17 to the LCD 12, display data transfer from the CPU 14 to the VRAM 17, or the like. The tablet controller 19 performs a series of tablet control operations such as scanning of the X and Y electrodes of the transparent tablet 11, detection of a voltage at a position designated by the stylus pen 13 (electrostatic coupling scheme), generation of X-Y coordinate data, transmission of X-Y coordinate data to the CPU 14, or the like. An external interface 20 is an interface for performing data communication between the data processing apparatus and an external unit as needed.

Fig. 10 is a cross sectional view showing an arrangement of the switch of the pen-tip incorporated in the stylus pen 13. As shown in Fig. 10, in a normal state, an electrode portion 33 of a pen-tip 31 in a pen shaft 30 is set in a non-contact state (OFF) by a spring 32. When, for example, hand-writing of a character or position designation (click) is to be performed by using the stylus 13, the pen-tip 31 is depressed against the force of the spring 32, and the electrode portion 33 is set in a contact state (ON). By using this contact (ON) and non-contact (OFF) data (switch data), it is detected that a designation of the position of a characteristic point of a drawing, icon designation, character hand-writing, or the like is performed on the transparent tablet 11.

The steps for preparing the drawing in this embodiment will be explained with reference to the flow charts of Figs. 11A to 11C.

In preparing the drawing, the CPU 14 displays a list of a various types of drawings (straight line, rectangle, circle, and the like) on the LCD 12 in accordance with the drawing preparing program. If a drawing is selected from the displayed list, the CPU 14 discriminates that the selected drawing is a drawing to be prepared (Steps S1, S2).

The drawing is prepared by designating a position of the characteristic point according to the various types of drawings, various types of lines, and the like. The characteristic point is a starting point and an ending point for the straight line, and two points of a diagonal for the rectangle, and a central point and a point on a circumference for the circle.

If the drawing to be prepared is selected, the CPU 14 sets an initial value of the cursor moving flag to "1", which shows that the cursor position is not on the already-prepared drawing, (Step S3), and instructs the tablet controller 19 to detect a coordinate. The tablet controller 19 reads a measurement of a coordinate designated by the stylus pen 13 on the transparent tablet 11, and a state of the switch of the pin tit of the stylus pen 13 (Step S4).

In a case where it is not detected that the switch of the pen-tip of the stylus pen 13 is changed to the ON state to OFF state, that is, the coordinate is detected by changing the switch from the OFF state to the ON state or the coordinate is detected without changing the state of the pen, the CPU 14 discriminates whether or not the coordinate of the pen-tip is on the line of the drawing which is already stored in a data buffer 38 of the drawing.

The CPU 14 obtains an area including the drawing from the coordinate of the characteristic point in drawing data stored in the RAM 15 (Step S6), and discriminates whether or not the coordinate of the pen-tip is included in the area (Step S7). As shown in Fig. 12, in a case where a plurality of drawings is already prepared, the CPU 14 discriminates each area shown by a broken line in the figure.

In a case where the coordinate of the pen-tip exists in the area including the drawing (Step S8), the CPU 14 calculates whether or not the input coordinate (the present position of the pen-tip) is on the line of the drawing based on the types of the drawings and the characteristic point in the area (Step S9).

In a case where the input coordinate of the pen-tip is not on the line of the already-prepared drawing (Step S10), the CPU 14 checks whether or not the cursor moving flag is "1", that is, whether or not the cursor position is on the already-prepared drawing (Step S11).

In a case where the cursor moving flag is "1", that is, the cursor position is not on the already-prepared drawing, the CPU 14 moves the curser to the coordinate position (input coordinate) of the present pen-tip by the LCD controller 18 (Step S12). The step is back to step S4 and performs the measurement of the coordinate. Therefore, in a case where the pen-tip of the stylus pen 13 is moved on the transparent tablet 11, the cursor moves in accordance with the position of the pen-tip.

In a case where the movement of the stylus pen 13 is stopped and the switch of the pen-tip is changed from the ON state to the OFF state (Step S5), the CPU 14 stores the coordinate of the present cursor position as one of the characteristic points ( starting and ending points for the straight line, and two diagonal points for the rectangle, and a central point and a point showing a radial distance for the circle), which define the drawing which is preparing (Step S13). Moreover, if the point is a final characteristic point (ending point of the straight line, second point of the rectangle, and the like), which defining the drawing (Step S14), the CPU 14 determines the drawing and stores input coordinate data as drawing data in the RAM 15 and expands the drawing pattern to the VRAM 17, and displays the drawing by the LCD controller 18 (Step S15).

Next, there is explained a case in which the characteristic point is correctly conformed onto the line of the already-prepared drawing thereby preparing a new drawing. In this case, the already-prepared drawing is the straight line, and the starting point of the drawing to be newly prepared is conformed onto the line of the already-prepared drawing.

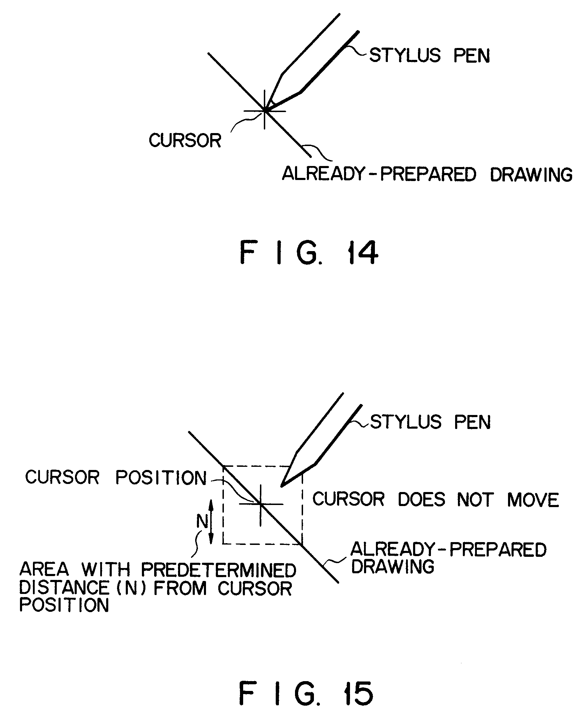

As shown in Fig. 13, in a case where the starting point is set without moving the cursor on the straight line, the characteristic point is set at the cursor position similar to the normal preparation of the drawing. On the other hand, as shown in Fig. 14, if the cursor is moved onto the straight line, the CPU 14 discriminates that the cursor is on the line of the already-prepared drawing (Steps S6 to S9) and the cursor moving flag is set to "0" (Step S16), which shows that the cursor is on the line of the drawing, and the cursor is moved to the position of the pen-tip, that is, on the line (Step S12).

Further, if the position of the pen-tip is moved (pen state is unchanged), the CPU 14 discriminates that the position of the pen-tip is not on the drawing (Step S10), and whether or not the cursor moving flag is "1" (Step S11).

In this case, since the cursor moving flag is already set to "0" in the step S16, the CPU 14 performs the calculation for obtaining a distance (L) between the coordinate of the present cursor position and that of the pen-tip position (Step S17).

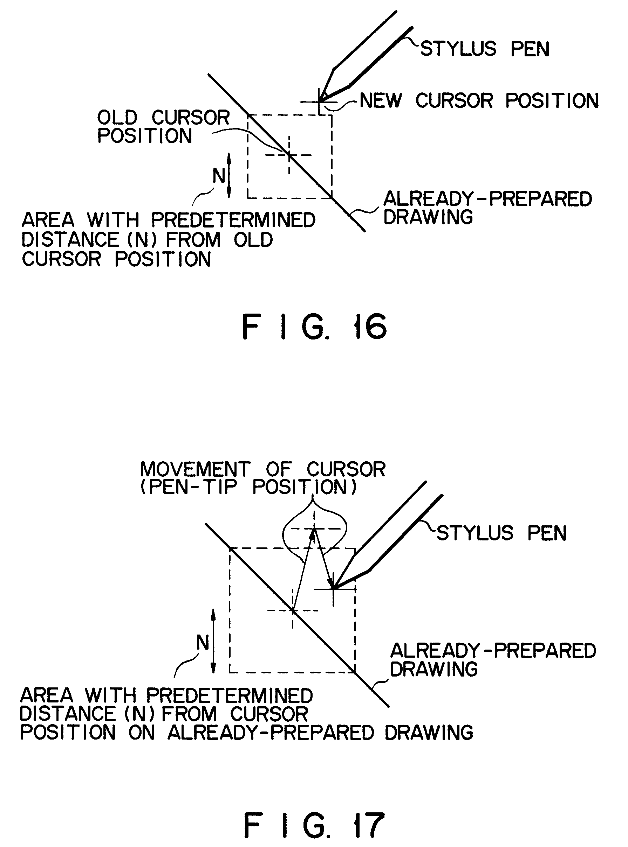

As a result, in a case where the distance (L) is not more than a predetermined distance (N), which is set in advance (Step S15), the CPU 14, as shown in Fig. 15, does not move the cursor to the coordinate of the pen-tip position and the step is back to the step S4, and the measurement of the coordinate is performed. On the other hand, in a case where the distance (L) is more than a predetermined distance (N) (Step S18), the CPU 14 sets the cursor moving flag to "1" (Step S19), and, as shown in Fig. 16, moves the cursor to the coordinate of the pen-tip position (Step S12).

In other words, in a case where the cursor is not moved onto the line of the already-prepared drawing, the cursor is moved in accordance with the pen-tip position. Also, once the cursor is moved onto the line of the already-prepared drawing, the cursor is fixed to the line of the drawing while the pen-tip is in the area, which is defined by the predetermined distance (N). Moreover, in a case where the pen-tip is moved onto the line again within the predetermined distance (N) from the point on the line where the pen-tip is positioned, the cursor is moved to the position.

Therefore, for conforming the characteristic point of the other drawing onto the line of the already-prepared drawing, the pen-tip may be only moved such that the pen-tip crosses the line of the already-prepared drawing. Due to this, it is unnecessary to perform designation for designating the characteristic point by correctly conforming the cursor position onto the line.

In order to move the cursor fixed onto the line of the drawing to the area within the distance (N) from the point on the the line of the drawing, as shown in Fig. 17, the cursor is once moved to the point, which is separated with more than the distance (N) from the point on the line of the drawing, thereafter, the pen-tip must be moved again into the predetermined area from the point on the line.

As mentioned above, the cursor is fixed onto the line by once moving the cursor onto the line of the already-prepared drawing. Due to this, the characteristic point (starting point of the straight line, and the like) defining the drawing is set, thereby the characteristic point can be correctly and easily conformed onto the line.

In the above embodiment, the predetermined area of the figure was shown by the rectangle. The shape of the predetermined area, however, may be a circle, and the like.

The present invention is not limited to the above-mentioned embodiment, and the various modifications of the present can be attained within the scope of the present invention.

## Claims

1. A drawing preparing system in a data processing apparatus, which has an integral display/input device (10) in which a display device and a coordinate inputting device are incorporated, prepares a drawing defined by a coordinate of a characteristic point designated by a cursor, and displays the drawing on said display device, characterized by comprising:

   first discriminating means (14, 15, 16) for discriminating whether or not a first coordinate input from said coordinate input device is on a line of an already-prepared drawing;

   second discriminating means (14, 15, 16) for discriminating whether or not a second coordinate input after discriminating that said first coordinate is on the line of the drawing is out of a predetermined area including said first coordinate;

   third discriminating means (14, 15, 16) for discriminating whether or not said second coordinate input after discriminating that said first coordinate is on the line of the drawing is in the predetermined area including said first coordinate; and

   cursor display position determining means (14, 15, 16, 17) for determining a cursor display position in accordance with the results of discrimination by said second and third discriminating means.

2. The system according to claim 1, characterized in that said cursor display position determining means unchanges the display position of the cursor after determining the cursor display position on said first coordinate whose position is discriminated by said first discriminating means that said first coordinate is on the line of the drawing excepting that it is discriminated by said second discriminating means that said cursor is out of said predetermined area and that it is discriminated by said third discriminating means that said cursor is on the line of the drawing in said predetermined area.

3. The system according to claim 1, characterized in that said first discriminating means comprises area discriminating means for discriminating whether or not said first coordinate is included in an area including the already-prepared drawing, and coordinate position discriminating means for discriminating whether or not said first coordinate is on the line based on the types of drawings in the corresponding area when it is discriminated that said first coordinate is included in said area.

4. The system according to claim 1, characterized in that said predetermined area including said first coordinate is determined by a distance set in advance on a basis of said first coordinate.

5. A method for preparing a drawing defined by a coordinate of a characteristic point designated by a cursor, characterized by comprising the steps of:

   a first discriminating step (S6, S7, S8, S9, S10) for discriminating whether or not an input first coordinate is on a line of an already-prepared drawing;

   a second discriminating step (S17, S18) for discriminating whether or not a second coordinate input after discriminating that said first coordinate is on the line of the drawing is out of a predetermined area including said first coordinate;

   a third discriminating step (S9, S10) for discriminating whether or not said second coordinate input after discriminating that said first coordinate is on the line of the drawing is in the predetermined area including said first coordinate; and

a cursor display position determining step (S12) for determining a cursor display position in accordance with the results of discrimination by said second and third discriminating means.

6. The method according to claim 5, characterized in that said cursor display position determining step unchanges the display position of the cursor after determining the cursor display position on said first coordinate whose position is discriminated by said first discriminating step that said first coordinate is on the line of the drawing, excepting that it is discriminated by said second discriminating step that said cursor is out of said predetermined area and that it is discriminated by said third discriminating step that said cursor is on the line of the drawing in said predetermined area.

7. The method to claim 5, characterized in that said first discriminating step comprises an area discriminating step (S6, S7, S8) for discriminating whether or not said first coordinate is included in an area including the already-prepared drawing, and coordinate position discriminating step (S9, S10) for discriminating whether or not said first coordinate is on the line based on the types of drawings in the corresponding area when it is discriminated that said first coordinate is included in said area.

8. The method according to claim 5, characterized in that said predetermined area including said first coordinate is determined by a distance set in advance on a basis of said first coordinate.

F I G. 1

PEN-TIP SWITCH
ON→OFF

F I G. 2

FIXED STARTING
POINT

F I G. 3

STARTING POINT

PEN-TIP SWITCH
ON→OFF

F I G. 4

EP 0 506 102 A2

ALREADY – PREPARED
STRAIGHT LINE

STRAIGHT LINE
TO BE PREPARED

F I G. 5

ALREADY – PREPARED
CIRCLE

STRAIGHT LINE
TO BE PREPARED

F I G. 6

STYLUS PEN

CURSOR

ALREADY – PREPARED
STRAIGHT LINE

F I G. 7

DIFFERENCE

PREPARED STRAIGHT
LINE

F I G. 8

9

F I G. 9

F I G. 10

FIG. 11A

F I G. 11B

F I G. 11C

F I G. 12

STYLUS PEN

NEW CURSOR POSITION

OLD CURSOR POSITION

ALREADY-PREPARED DRAWING

F I G. 13

14

STYLUS PEN

CURSOR

ALREADY - PREPARED DRAWING

# F I G. 14

STYLUS PEN

CURSOR POSITION

CURSOR DOES NOT MOVE

N

ALREADY - PREPARED
DRAWING

AREA WITH PREDETERMINED
DISTANCE (N) FROM CURSOR
POSITION

# F I G. 15

STYLUS PEN

NEW CURSOR POSITION

OLD CURSOR POSITION

N

AREA WITH PREDETERMINED DISTANCE (N) FROM OLD CURSOR POSITION

ALREADY-PREPARED DRAWING

## F I G. 16

MOVEMENT OF CURSOR (PEN-TIP POSITION)

STYLUS PEN

N

AREA WITH PREDETERMINED DISTANCE (N) FROM CURSOR POSITION ON ALREADY-PREPARED DRAWING

ALREADY-PREPARED DRAWING

## F I G. 17